# EUROPEAN PATENT APPLICATION

(11) **EP 0 713 647 A1**
(43) Date of publication of application: **29.05.1996**
(21) Application number: 95203260.5
(22) Date of filing: 27.11.1995
(51) Int. Cl.: A01N 53/00

(54) **Insect-repellent composition based on pyrethrum extract**

(30) Priority: 25.11.1994 NL 9401982
(71) Applicant: JAICO N.V., B-3660 Opglabbeek (BE)
(72) Inventor: Taan, Mohamed Saint Jude Clinic, Apapa, Lagos (NI)
(74) Representative: de Bruijn, Leendert C.

(57) **Abstract**

The invention concerns an insect-repellent composition consisting of a solution of pyrethrine in a mono- or polyvalent alcohol with a UV-absorbing substance and optionally a synergetically active substance. The UV-absorbing substance is for example a benzophenone or a cinnamate, salicylate or anthranilate ester. The synergetically active substance is for example piperonyl butoxide. The ratio between pyrethrine and UV absorbing substance is preferably between 2:1 and 1:5, and the ratio between pyrethrine and piperonyl is preferably between 1:1 and 1:5.

## Description

The present invention relates to an insect-repellent composition based on a pyrethrum extract.

The insect-repellent effect of extracts of the pyrethrum flower and other chrysanthemum species has been known for a long time. Their active components are esters of trans-chrysanthemic acid and trans-pyrethric acid, which are referred to as pyrethrine I and II, cinerine I and II, and jasmoline I and II, respectively. The terms pyrethrum and pyrethrine as used herein comprise these different components both individually and in combination.

This insect-repellent substance has a low toxicity for the human body, but it has been determined that pyrethrine as an insect-repellent substance shows a diminished and often insufficient effect on insects.

The absorption of the pyrethrine suspension in the perspiration of the skin is one of the causes of this reduced effect. Also, chemical interaction with the perspiration and deep penetration of the suspension into the skin appear to have a clear role in the development of this phenomenon. As far as known, this phenomenon is not solely due to the dilution of the pyrethrine solution in the perspiration. Tests have also shown that the persistence of the toxicity was greater each time when the pyrethrine solution was spread on textile fabrics. The question arose whether the reduced duration of the toxicity was due to migration into the skin and into the textile fabrics, respectively.

Surprisingly it was found that a solution which contains a UV absorbing substance in addition to a pyrethrum extract or a component thereof results in a substantial increase of the duration of the repellent and toxic effect on insects.

In order to achieve the desired effect, a solution of a pyrethrum oil in a mono-or polyvalent alcohol, to which one or more substances absorbing UV radiation have been added, is used. It was found surprisingly that the degradation of the natural insect-repellent substance under the influence of light is greatly retarded by the addition of a substance which absorbs UV radiation. This means that the repellent effect of pyrethrine is considerably lengthened.

It is preferred that a synergetically active substance for pyrethrines known as such, is also added to the solution.

UV filters known as such, in particular those absorbing UV radiation above 280 nm, can be used as the UV absorbing substance. Examples thereof are o-hydroxybenzophenones, salicylic acid esters, cinnamic acid esters, p-methoxycinnamic acid esters, anthranilic acid esters, urocanic acid and its esters, umbelliferone and its substituted analogues, and p-aminobenzoic acid esters and their N-alkyl and N-hydroxyalkyl derivatives. Specific examples are 2-hydroxy-4-methoxybenzophenone (oxybenzone), 2,2'-dihydroxy-4-methoxybenzophenone (dioxybenzone), benzyl cinnamate, octyl p-methoxycinnamate, 2-ethoxyethyl p-methoxycinnamate, octyl salicylate, glyceryl aminobenzoate and menthyl anthranilate. In particular, a cinnamic ester or p-methoxycinnamic ester can be used as a UV filter.

The weight ratio between the pyrethrine and the UV absorbing substance in the composition according to the invention lies preferably between 4:1 and 1:10. in particular between 2:1 and 1:5.

As the synergetically active substance use can be made for example of an ethoxylated piperonyl derivative, such as piperonyl butoxide or sesamex.

Good results were found when the ratio of pyrethrine to piperonyl butoxide varied between 2:1 and 1:10, in particular between 1:1 and 1:5.

The solvent for the composition according to the invention is basically an alcohol, such as ethanol, propanol, butanol, methoxyethanol, glycol or glycerol. If necessary, a solvent aid or diluent, such as water, may be present.

The concentration of the pyrethrine is in general between 0.1 and 5 wt.%, in particular between 0.5 and 2.5 wt.%. The concentration of the UV absorbing substance is in general between 0.5 and 10 wt.%, in particular between 0.75 and 5 wt.%. The concentration of the synergetically active substance is in general between 0 and 10 wt.%, in particular between 1 and 5 wt.%.

For the remainder, the composition may contain conventional ingredients, such as a perfume, a film-forming composition for example based on hydroxypropylmethylcellulose, or other cosmetic additives.

The invention also relates to a method of controlling insects, in particular with humans or animals, by applying a combination of a natural pyrethrine and a UV-absorbing substance. The composition described above can be used therein at a rate of for example 0.5-5 ml per application (man) or 0.025-2.5 ml, in particular 0.1-2 ml per dm² of uncovered body surface, for example by rubbing or spraying.

The invention thus results in a considerable lengthening of the active duration of the insect-repellent effect of pyrethrine. This allows an effective activity of about 24 hours, which can be regarded as an ideal length of time for use with man or animals.

Laboratory experiments have shown that the repellent effect on female anopheles (malaria mosquitoes) was noticeable for 24 hours with laboratory mice at a temperature of about 20°C. In these experiments, mice were depilated over a surface of 20 cm² and the depilated surface was treated with 100 µl of a solution of 1.0 g of pyrethrum extract, 2 g of octyl p-methoxycinnamate and 4 g piperonyl butoxide in 100 ml ethanol and then exposed to 30 anopheles. The treated mouse was not stung for 24 hours, whereas an untreated control mouse was stung 25 to 28 times within 24 hours. This thus shows a considerable lengthening of the repellent effect of the pyrethrum extract.

## Claims

1. Insect-repellent composition based on pyrethrum extract, characterised in that the composition comprises a solution of a pyrethrine in a mono- or polyvalent alcohol and a substance acting as a UV filter.

2. Insect-repellent composition according to claim 1, characterised in that the substance acting as a UV filter is an o-hydroxybenzophenone, salicylic acid ester, cinnamic acid esters, p-methoxycinnamic acid rester and/or anthranilic acid ester.

3. Insect-repellent composition according to claim 1 or 2, characterised in that that the ratio pyrethrine / UV filter is between 2/1 and 1/5.

4. Insect-repellent composition according to any one of claims 1-3, characterised in that the solution also contains a a synergetically active substance, such as piperonyl butoxide.

5. Insect-repellent composition according to claim 4, characterised in that the ration pyrethrine / piperonyl butoxide is between 1/1 and 1/5.

6. Method for controlling insects, comprising applying an alcoholic solution of a pyrethrine and a substance acting as a UV filter on the human or animal skin at a rate of 0.025-2.5 ml per dm².
